# FASCICULE DE BREVET EUROPEEN

(11) **EP 2 534 350 B1**
(45) Date de publication et mention de la délivrance du brevet: **03.02.2016**
(21) Numéro de dépôt: 11708915.1
(22) Date de dépôt: 09.02.2011
(51) Int. Cl.: F02K 3/06, F01D 25/28, F02C 7/20, F01D 21/04, F01D 25/24

(54) **Liaison entre le carter d'echappement et un anneau structural de conduit de soufflante d'un turboreacteur**
Verbindung zwischen dem Abgasgehäuse und einem Strukturring des Lüfterkanals eines Triebwerks
Link between the exhaust casing and a structural ring of the fan duct of a jet engine

(30) Priorité: 10.02.2010 FR 1050949
(43) Date de publication de la demande: 19.12.2012
(73) Titulaire: SNECMA, 75015 Paris (FR)
(72) Inventeur: BELLABAL, François, Robert, F-77300 Fontainebleau (FR); SEIZE, Guilhem, F-94230 Cachan (FR); VINCENT, Thomas, Alain, Christian, F-91120 Palaiseau (FR)
(74) Mandataire: Gevers France
(86) Numéro de dépôt international: PCT/FR2011/050276
(87) Numéro de publication internationale: WO 2011/098728

(56) Documents cités:
- EP-A1- 2 022 973
- WO-A2-2010/007220
- US-A1- 2005 022 501
- US-A1- 2008 307 795

## Description

La présente invention concerne le domaine des turboréacteurs à double flux comprenant un conduit de flux secondaire allongé. Elle concerne les moteurs de ce type fixés au fuselage de l'aéronef ou les moteurs militaires.

Un turboréacteur à double flux comprend une soufflante qui lorsqu'elle est à l'avant du moteur délivre un flux d'air comprimé qui est séparé en deux flux annulaires concentriques : un flux primaire et un flux secondaire entourant le flux primaire. Ce dernier est guidé vers la partie générateur de gaz du moteur qui comprend des étages de compression, une chambre de combustion et une section de turbines par lesquelles la soufflante est entraînée. Le flux primaire contenant les gaz de combustion est ensuite éjecté dans une tuyère d'échappement. Le flux secondaire est redressé en aval de la soufflante et est lui-même éjecté. Dans les moteurs civils il fournit l'essentiel de la poussée.

Dans une configuration le flux secondaire est guidé dans un canal de soufflante (by-pass duct) qui s'étend autour du moteur entre la soufflante et la tuyère d'échappement du flux primaire, comprend deux parois coaxiales sensiblement cylindriques qui délimitent entre elles un espace annulaire. La paroi interne du canal de soufflante forme l'enveloppe du générateur de gaz. La paroi externe du canal de soufflante forme un conduit qui s'étend du plan des ailettes redresseurs jusqu'au niveau de la tuyère d'échappement. Le conduit externe du canal de soufflante est désigné dans le domaine par l'acronyme anglais OFD (outer fan duct).

Le moteur peut être monté sous l'aile de l'aéronef ou bien le long de son fuselage, vers l'arrière notamment. Dans ce cas le moteur comprend un canal de soufflante, tel que décrit ci-dessus. Les attaches du moteur à l'aéronef sont situées au niveau de deux plans transversaux : un plan à l'amont passant par le carter structural amont que l'on désigne carter intermédiaire et un plan à l'aval passant par le carter structural aval que l'on désigne carter d'échappement.

Pour assurer la fixation à l'aval, dans le cas d'un montage sur le fuselage, on prévoit un anneau structural sur le conduit externe du canal de soufflante, OFD, cet anneau étant relié par des bras ou des bielles à la virole ou anneau extérieur du carter d'échappement. La demande de brevet EP 2022973 au nom de la demanderesse décrit un exemple de structure de conduit externe de canal de soufflante.

La liaison entre les deux anneaux ci-dessus peut se présenter sous la forme de bras radiaux répartis tout autour de l'axe du moteur et fixés rigidement aux deux anneaux. La liaison peut se présenter aussi sous la forme de bielles inclinées par rapport à l'axe du moteur. Les bielles sont fixées aux deux anneaux par des attaches de type chapes et axe. Une telle attache est formée de deux chapes, simple ou double, solidaires l'une de l'extrémité de la bielle l'autre de la paroi de l'anneau et traversées par un axe commun. Plus particulièrement, les bielles sont disposées par paires, les bielles de chaque paire étant tangentes à l'anneau du carter d'échappement tout en étant convergentes sur une attache de l'anneau du conduit externe du canal de soufflante.

Que la liaison soit formée de bras radiaux ou de bielles, elle est hyperstatique ; les efforts transitent ainsi par tous les bras ou bielles. Dans les solutions de l'art antérieur tous les éléments de la liaison : axes, chapes, bielles ou bras, sont dimensionnés pour résister mécaniquement aux efforts qui résulteraient du balourd engendré par la perte d'une aube dans le moteur. Il s'agit de ne pas risquer de voir le moteur se décrocher si une telle situation critique devait survenir. La masse de l'ensemble formant la liaison est en conséquence élevée. Par ailleurs, dans la mesure où les efforts susceptibles de résulter d'une rupture d'aube transitent potentiellement par tous les bras ou bielles, l'anneau du conduit externe du canal de soufflante doit également être capable de résister à ces charges sur toute sa circonférence. Il est donc dimensionné en conséquence.

La présente invention a pour objectif de réaliser une liaison entre les deux anneaux présentés ci-dessus qui, tout en assurant la reprise des efforts du type générés par une rupture d'aube de soufflante, permet de réduire la masse de l'ensemble par rapport aux solutions de l'art antérieur.

L'invention a également pour objet la réalisation d'une liaison qui ne modifie pas la structure de l'ensemble.

L'invention a également pour objet une solution qui puisse être appliquée à toute forme de liaison entre les deux anneaux, composée de bras avec des fixations rigides ou bien de bielles fixées par des axes traversant des chapes.

On parvient à réaliser l'objectif de l'invention avec un ensemble comprenant un anneau externe de carter d'échappement, un anneau structural d'un conduit externe de canal de soufflante d'un turboréacteur à double flux concentrique par rapport à l'anneau externe de carter d'échappement, et au moins un premier et un second bras ou bielle de liaison formant une liaison hyperstatique en étant fixés par une extrémité à l'anneau de carter d'échappement et par l'autre extrémité à l'anneau structural du conduit externe, caractérisé par le fait que la liaison formée par le premier bras ou bielle de liaison est agencée pour être rompue lorsqu'elle soumise à une charge au-delà d'une charge déterminée et le second bras ou bielle est agencé pour former un chemin de transmission des efforts entre lesdits anneaux quand ladite liaison est rompue.

La charge déterminée est avantageusement supérieure à la charge limite et inférieure à la charge qui serait engendrée par la rupture d'une aube, de soufflante notamment. Grâce à l'invention, dans la mesure où l'on définit les éléments de la liaison qui doivent assurer la transmission des efforts dans le cas où surviendrait cette situation critique, on peut alléger les autres éléments et gagner en masse.

Conformément à une autre caractéristique, l'anneau structural du conduit externe du canal de soufflante comprend un moyen de suspension du turboréacteur à la structure d'un aéronef, le second bras ou bielle est alors plus près de ladite suspension que le premier bras ou bielle. De la même manière que pour les bras ou bielles, en déterminant les chemins des efforts dans la situation de rupture d'aube on rend possible un dimensionnement à masse réduite.

L'invention peut être mise en oeuvre de différentes manières. Les modes de réalisation suivants sont non exhaustifs :

Le premier bras ou bielle est dimensionné pour flamber lorsqu'il est soumis à ladite charge déterminée.

L'ensemble comprenant au moins un premier et un second desdits bras, lesdits bras sont disposés radialement par rapport à l'axe des anneaux

L'ensemble comprenant une première et une seconde desdites bielles dont les attaches sont du type à axes et chapes, la première bielle comprend au moins une attache qui se rompt lorsqu'elle est soumise à ladite charge déterminée.

Plus particulièrement, selon ce dernier mode de réalisation avec au moins deux paires de bielles inclinées par rapport à la direction radiale, notamment tangentiellement par rapport à l'anneau de carter d'échappement, avec au moins une paire desdites premières bielles et au moins une paire desdites secondes bielles.

Quand la liaison comprend trois paires de bielles, deux paires de bielles forment avantageusement lesdites premières bielles et une paire forme lesdites secondes bielles.

Par exemple, une paire desdites premières bielles comprend un axe fusible de l'attache à l'anneau susceptible de se rompre quand il est soumis à la charge déterminée, l'axe de la seconde paire de bielles étant monté avec un moyen détrompeur. Notamment le moyen détrompeur est formé par la différence des diamètres des têtes desdits axe fusible et axe de l'attache de la seconde paire de bielles et par le diamètre du passage de la tête de l'axe de l'attache de la seconde paire de bielles.

L'invention porte aussi sur le turboréacteur à double flux à soufflante avant et à conduit de flux secondaire s'étendant en aval de la soufflante jusqu'à au moins le plan du carter d'échappement comprenant un ensemble tel que décrit.

D'autres caractéristiques et avantages ressortiront de la description qui suit de différents modes de réalisation, la description étant accompagnée de dessins annexés sur lesquels :
La figure 1 est une vue schématique en perspective d'un turboréacteur à double flux,
La figure 2 représente schématiquement une coupe transversale du moteur de la figure 1 passant par les deux anneaux structuraux du conduit externe du canal de soufflante et externe du carter d'échappement,
La figure 3 représente une variante de la liaison de la figure 2,
La figure 4 représente un axe fusible à tige creuse
La figure 5 représente un axe non fusible
La figure 6 montre un montage avec détrompeur,
La figure 7 montre une variante de liaison avec bras radiaux.

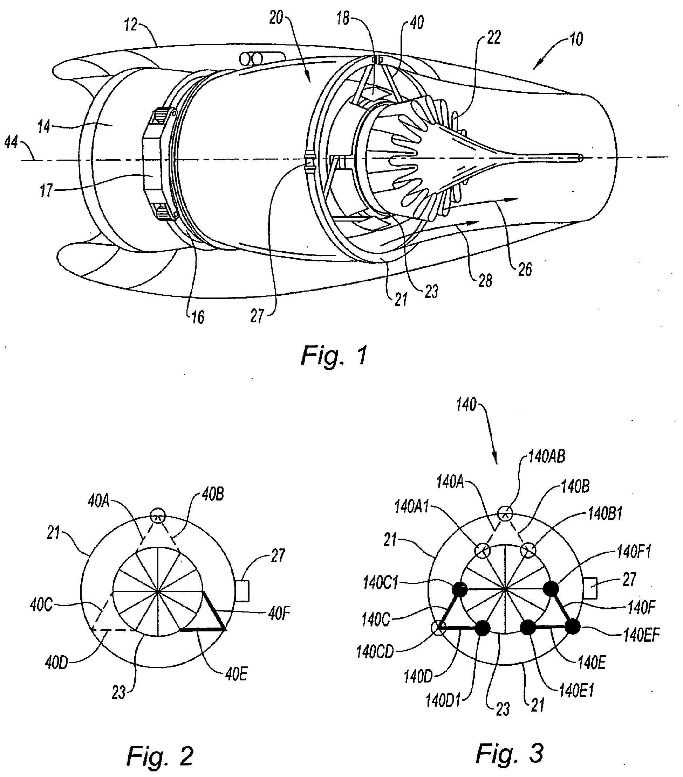

La figure 1 représente un turboréacteur à double flux 10 à soufflante avant à l'intérieur d'une nacelle 12 et comprenant de l'amont vers l'aval, un carter de soufflante 14, un carter intermédiaire 16 et un canal de soufflante annulaire ménagé entre deux conduits sensiblement cylindriques : un conduit interne 18 formant l'enveloppe de la partie du moteur parcourue par le flux primaire, formant générateur de gaz, et un conduit externe 20. Le conduit externe 20 du canal de soufflante s'étend ici jusqu'en aval de la zone de confluence entre le flux primaire 26 et le flux secondaire 28 où les deux flux sont mélangés par le mélangeur 22. Le conduit externe 20 du canal de soufflante a une fonction structurale en assurant la reprise des efforts entre le moteur et l'aéronef sur lequel il est monté. Il comprend ainsi un anneau structural 21 relié ici par des bielles 40 à l'anneau externe 23 du carter d'échappement du générateur de gaz. Le moteur est fixé à l'aéronef, à l'amont, par une attache 17 solidaire du carter intermédiaire et à l'aval par une attache 27 solidaire de l'anneau structural 21 de conduit externe 20 du canal de soufflante.

Dans l'exemple représenté, la liaison entre l'anneau structural 21 du conduit externe de canal de soufflante et l'anneau 23 du carter d'échappement est formée de bielles 40 fixées par les extrémités aux deux anneaux. Chaque fixation comprend, comme cela est connu et non représenté, une chape solidaire respectivement de l'anneau et de l'extrémité de la bielle, les deux chapes étant traversées par un axe commun. Comme on le voit sur la figure la liaison est formée plus précisément de trois paires de bielles 40 tangentes à l'anneau 23 de carter d'échappement et convergeant par paires sur l'anneau structural 21 externe.

Alors que selon l'art antérieur, on dimensionne les éléments constituant la liaison entre les anneaux de manière à ce que chacun soit à même de transmettre les efforts dans le cas où surviendrait une rupture d'aube de soufflante, conformément à l'invention on dimensionne différemment les éléments de la liaison. La liaison comprend des éléments fusibles, c'est-à-dire qu'ils cèdent quand ils sont soumis à une charge supérieure à une charge déterminée. Cette charge déterminée est avantageusement inférieure à la charge de perte d'aube, qui correspond à la charge ultime, tout en restant supérieure à la charge limite. Ladite charge limite est définie comme étant la charge en-deçà de laquelle aucune détérioration desdits éléments fusibles n'est acceptable. La liaison comprend également des éléments non fusibles dimensionnés pour résister à la charge occasionnée en cas de rupture d'une aube, notamment de soufflante. Ils assurent la transmission des efforts entre le moteur et l'attache à l'aéronef après rupture des éléments fusibles.

La figure 2 illustre un premier mode de réalisation de l'invention. Elle représente une vue schématique en coupe transversale perpendiculaire à l'axe 44 du moteur passant par la liaison entre les deux anneaux 21 et 23. La liaison comprend comme dans l'exemple de la figure 1, trois paires de bielles 40, respectivement 40A et 40B ; 40C et 40D ; 40 E et 40F. Les bielles sont fixées à chacun des anneaux 21 et 23 respectivement par des attaches du type à chapes et axes comme cela est connu en soi et non représenté. Les bielles sont repérées par rapport à l'attache 27 de l'anneau structural 21 du conduit externe de canal de soufflante 20. L'attache sur le fuselage d'un aéronef est latérale, soit à droite, défini en regardant vers l'amont, soit à gauche selon que le moteur est monté d'un coté ou de l'autre du fuselage.

Deux paires de premières bielles 40A, 40B et 40C, 40D sont dimensionnées pour flamber lorsqu'elles sont soumises aux dites charges déterminées. Elles sont dimensionnées en pratique, au flambage pour tenir 1,1 fois lesdites charges limites. Les axes et les chapes des attaches des bielles fusibles sont quant à eux dimensionnés pour ne pas rompre tant que les bielles n'ont pas flambé.

Les secondes bielles 40 E et 40F sont dimensionnées pour résister et ne pas se rompre quand elles sont soumises auxdites charges déterminées et aux charges correspondant à la perte d'une aube. Il est à noter que les secondes bielles sont parmi les bielles qui forment la liaison celles qui sont le plus près de l'attache 27. Le chemin d'efforts séparant le point de convergence des deux secondes bielles 40 E et 40F de l'attache est plus court que le chemin que les efforts sont susceptibles de parcourir entre les points de convergence des premières attaches et l'attache 27. Ainsi, d'une part le bras de levier entre le point de convergence et l'attache est minimal, d'autre part il suffit de renforcer cette portion de l'anneau structural 21 ce qui constitue une possibilité d'allégement global de la structure.

Lors de la survenue d'une rupture d'aube de fan, un balourd important est engendré par le déséquilibre du rotor qui en résulte ; ce balourd se transmet vers l'aval jusqu'au plan de fixation aval. Conformément à l'invention, les premières bielles flambent et la charge est transmise à l'attache par les secondes bielles, 40 E et 40F, et le chemin le long de l'anneau structural externe 21.

La figure 3 représente une variante de réalisation dans laquelle les éléments fusibles sont agencés dans les attaches. La liaison 140 entre les deux mêmes anneaux 21 et 23 comprend trois paires de bielles. Les premières bielles 140A et 140B sont liées aux anneaux par les attaches 140A1, 140B1 et 140AB respectivement à l'anneau externe du carter d'échappement 23 et à l'anneau structural 21. Ces premières bielles sont fusibles soit en étant susceptibles de flambage soit par leur attaches notamment les axes traversant les chapes.

Une autre paire de premières bielles est formée par les bielles 140C et 140D ; ces premières bielles sont ici dimensionnées pour résister aux charges de rupture d'aube. Seule l'attache 140CD des bielles à l'anneau structural 21 est fusible ; les autres attaches 140C1 et 140D1 ne sont pas fusibles. Les axes des attaches 140A1, 140B1, 140AB et 140CD sont avantageusement dimensionnés pour tenir 1,1 fois les charges limites déterminées en flambage transversal.

Les secondes bielles 140 E et 140F ne sont pas fusibles aussi bien les bielles elles mêmes que leurs attaches 140 El, 140F1 et 140EF.

Le principe de fonctionnement est le même que précédemment en cas de survenue d'une rupture d'aube de soufflante. La liaison formée par les premières bielles 140A, 140B, 140C et 140D cède, celle formée par les secondes bielles résiste et assure la transmission des efforts. Comme dans la solution précédente les secondes bielles sont disposées le plus près de l'attache 27 pour que le bras de levier soit le plus faible possible.

La variante de la figure 3 présente l'avantage dans le cas où l'on est amené à changer le montage sur le fuselage de l'aéronef de droite à gauche, de ne devoir changer que les axes 140CD et 140EF et les intervertir en raison de la symétrie par rapport au plan vertical passant par l'axe moteur. Dans le cas où cette variante est adoptée, il faut lui associer un détrompeur qui évite le risque d'intervertir au montage les axes fusibles des attaches 140CD et 140EF.

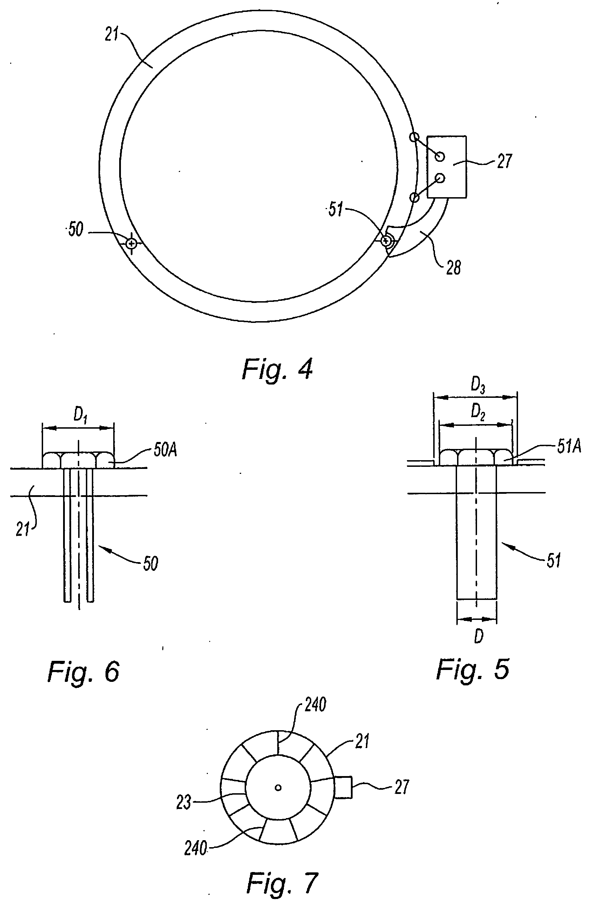

Un exemple de détrompeur est illustré sur les figures 4 à 6. L'axe fusible 50 représenté sur la figure 4 est creux et présente une moindre résistance que l'axe non fusible 51. Afin de les distinguer, le diamètre D1 de la tête 50A de l'axe 50 est plus grand que le diamètre de l'axe D2 de la tête 51A de l'axe 51. La figure 6 montre un moyen de détrompage. L'anneau structural 21 du conduit externe du canal de soufflante comprend avec l'attache 27 une tôle 28 montée d'un coté sur l'attache 27 et de l'autre dans le plan où vient prendre appui la tête 51A de l'axe non fusible 51. Cette tôle 28 présente une encoche 28A suffisamment large pour permettre à la tête 51A de diamètre D2 de venir s'y loger mais pas la tête 50A de diamètre D1, car D1>D2. Ainsi lors du montage le monteur, ne pourra introduire l'axe fusible dans le logement de fixation des secondes bielles.

L'invention a été décrite avec une liaison formée de trois paires de bielles. Il entre également dans le cadre de l'invention d'appliquer la solution à une liaison avec huit bielles ou encore un nombre différent de bielles.

La figure 7 montre un exemple schématique de liaison 240 avec des bras disposés radialement entre l'anneau externe 23 du carter d'échappement et l'anneau structural de conduit externe du canal de soufflante. La solution s'applique mutatis mutandis.

## Revendications

1. Ensemble comprenant un anneau externe (23) de carter d'échappement, un anneau structural (21) d'un conduit externe de canal de soufflante d'un turboréacteur à double flux (10) concentrique par rapport à l'anneau externe (23) de carter d'échappement, et au moins un premier et un second bras (240) ou bielle (40, 140) de liaison formant une liaison hyperstatique en étant fixés par une extrémité à l'anneau externe (23) de carter d'échappement et par l'autre extrémité audit anneau structural (21), **caractérisé par le fait que** la liaison formée par le premier bras (140A-D) ou bielle (40A-D, 140A-D) de liaison est agencée pour être rompue au-delà d'une charge déterminée et le second bras (140 E-F) ou bielle (40 E-F, 140 E-F) est agencé pour former un chemin de transmission des efforts entre lesdits anneaux (21, 23) quand ladite liaison est rompue.

2. Ensemble selon la revendication précédente dont l'anneau structural comprend un moyen (27) de suspension du turboréacteur à la structure d'un aéronef, le second bras (140 E-F) ou bielle (40 E-F, 140 E-F) étant plus près dudit moyen de suspension que le premier bras ou bielle.

3. Ensemble selon l'une des revendications précédentes dont le premier bras ou bielle (40A-D, 140A-B) est dimensionné pour flamber lorsqu'il est soumis à ladite charge déterminée.

4. Ensemble selon la revendication précédente comprenant au moins un premier et un second desdits bras (140), lesdits bras étant disposés radialement par rapport à l'axe des anneaux

5. Ensemble selon l'une des revendications 1 à 3 comprenant une première et une seconde desdites bielles dont les attaches sont du type à axes et chapes, la première bielle comprenant au moins une attache (140CD) qui se rompt lorsqu'elle est soumise à ladite charge déterminée.

6. Ensemble selon la revendication précédente comprenant au moins deux paires de bielles inclinées par rapport à la direction radiale notamment tangentiellement par rapport à l'anneau de carter d'échappement, avec au moins une paire desdites premières bielles (40A-D ; 140A-D) et au moins une paire desdites secondes bielles (40 E-F ; 140 E-F).

7. Ensemble selon la revendication précédente comprenant trois paires de bielles, deux paires de bielles formant lesdites premières bielles et une paire formant lesdites secondes bielles.

8. Ensemble selon la revendication précédente dont une paire desdites premières bielles comprend un axe fusible (50) de l'attache à l'anneau susceptible de se rompre quand il est soumis à la charge déterminée, l'axe de la seconde paire de bielles étant monté avec un moyen détrompeur.

9. Ensemble selon la revendication précédente dont le moyen détrompeur est formé par la différence des diamètres (D1, D2) des têtes (50A, 511A) desdits axe fusible (50) et axe (51) de l'attache de la seconde paire de bielles et par le diamètre du passage de la tête de l'axe de l'attache de la seconde paire de bielles.

10. Turboréacteur à double flux à soufflante avant et à conduit de flux secondaire s'étendant en aval de la soufflante jusqu'à au moins le plan du carter d'échappement comprenant un ensemble selon l'une des revendications précédentes.

## Patentansprüche

1. Gruppe, die einen externen Ring (23) eines Auspuffgehäuses, einen Strukturring (21) einer externe Leitung des Gebläsekanals eines Turboreaktors mit doppeltem konzentrischen Strom (10) im Verhältnis zum äußeren Ring (23) des Auspuffgehäuses und wenigstens einen ersten und einen zweiten Arm (240) oder eine erstes oder zweites Verbindungsglied (40, 140) umfasst, die eine hyperstatische Verbindung bilden und dabei durch ein Ende am externen Ring (23) des Auspuffgehäuses und durch das andere Ende des genannten Strukturrings (21) befestigt sind, **gekennzeichnet durch** die Tatsache, dass die **durch** den ersten Arm (140 A-D) oder das erste Verbindungsglied (40A-D, 140 A-D) geformte Verbindung angeordnet ist, um über eine bestimmte Last hinaus gebrochen zu werden, und der zweite Arm (140 E-F) oder das zweite Verbindungsglied (40 E-F, 140 E-F) angeordnet ist, um einen Übertragungsweg der Beanspruchungen zwischen den genannten Ringen (21, 23) zu bilden, wenn die genannte Verbindung gebrochen ist.

2. Gruppe gemäß dem voranstehenden Anspruch, dessen Strukturring ein Aufhängungsmittel (27) des Turboreaktors an der Struktur eines Luftfahrzeugs umfasst, wobei der zweite Arm (140 E-F) oder das zweite Verbindungsglied (40 E-F, 140 E-F) näher an dem genannten Aufhängungsmittel ist als der erste Arm oder das erste Verbindungsglied.

3. Gruppe gemäß einem der voranstehenden Ansprüche, dessen erster Arm oder erstes Verbindungsglied (40A-D, 140A-B) dazu ausgelegt ist, um abzusengen, wenn er/es der genannten bestimmten Last unterworfen ist.

4. Gruppe gemäß dem voranstehenden Anspruch, die wenigstens einen ersten und einen zweiten der genannten Arme (140) umfasst, wobei die genannten Arme im Verhältnis zur Achse der Ringe radial angeordnet sind.

5. Gruppe gemäß Anspruch 1 bis 3, die ein erstes und ein zweites der genannten Verbindungsglieder umfasst, deren Befestigungen von dem Typ mit Achse und Gabeln sind, wobei das erste Verbindungsglied wenigstens eine Befestigung (140CD) umfasst, die bricht, wenn sie der genannten bestimmten Last unterworfen wird.

6. Gruppe gemäß dem voranstehenden Anspruch, die wenigstens zwei Paar Verbindungsglieder, die im Verhältnis zur radialen Richtung insbesondere tangential im Verhältnis zum Ring des Auspuffgehäuses geneigt sind, mit wenigstens einem Paar der genannten ersten Verbindungsglieder (40A-D; 140A-D) und wenigstens einem Paar der genannten zweiten Verbindungsglieder (40 E-F; 140 E-F) umfasst.

7. Gruppe gemäß dem voranstehenden Anspruch, die drei Paar Verbindungsglieder umfasst, wobei zwei Paar Verbindungsglieder die genannten ersten Verbindungsglieder bilden und ein Paar die genannten zweiten Verbindungsglieder bilden.

8. Gruppe gemäß dem voranstehenden Anspruch, von der ein Paar der genannten ersten Verbindungsglieder eine Schmelzsicherungsachse (50) der Befestigung an dem Ring umfasst, der brechen kann, wenn er der bestimmten Last unterworfen ist, wobei die Achse des zweiten Paars Verbindungsglieder mit einem Unverwechselbarkeitsmittel montiert ist.

9. Gruppe gemäß dem voranstehenden Anspruch, dessen Unverwechselbarkeitsmittel durch die Differenz der Durchmesser (D1, D2) der Köpfe (50A, 51 A) der genannten Schmelzsicherung (50) und Achse (51) der Befestigung des zweiten Paars Verbindungsglieder und durch den Durchmesser des Durchgangs des Kopfes der Achse der Befestigung des zweiten Paars Verbindungsglieder geformt ist.

10. Turboreaktor mit Gebläsestrom vor und an der sekundären Stromleitung, die sich dem Gebläse nachgeschaltet bis wenigstens zur Ebene des Auspuffgehäuses erstreckt, umfassend eine Gruppe gemäß einem der voranstehenden Ansprüche.

## Claims

1. An assembly comprising an outer ring (23) of an exhaust casing, a structural ring (21) of an outer duct of the by-pass duct of a two-flow jet engine (10) which is concentric relative to the outer ring (23) of the exhaust casing, and at least one first and one second arm (240) or connecting rod (40, 140) which form(s) a hyperstatic link, whilst being secured at one end to the outer ring (23) of the exhaust casing, and at the other end to said structural ring (21), **characterized in that** the link which is formed by the first arm (140A-D) or connecting rod (40A-D, 140A-D) is designed to be broken beyond a predetermined load, and the second arm (140 E-F) or connecting rod (40 E-F, 140 E-F) is designed to form a path for transmission of the forces between said rings (21, 23) when said link is broken.

2. The assembly as claimed in the preceding claim, the structural ring of which comprises a means (27) for suspension of the jet engine on the structure of an aircraft, the second arm (140 E-F) or connecting rod (40 E-F, 140 E-F) being closer to said suspension means than the first arm or connecting rod.

3. The assembly as claimed in one of the preceding claims, the first arm or connecting rod (40A-D, 140A-B) of which has dimensions such as to buckle when it is subjected to said predetermined load.

4. The assembly as claimed in the preceding claim, comprising at least a first and a second one of said arms (140), said arms being arranged radially relative to the axis of the rings.

5. The assembly as claimed in one of claims 1 to 3, comprising a first and a second one of said connecting rods, the attachments of which are of the type with pins and clevises, and the first connecting rod comprising at least one attachment (140CD) which breaks when it is subjected to said predetermined load.

6. The assembly as claimed in the preceding claim, comprising at least two pairs of connecting rods which are inclined relative to the radial direction, and in particular tangentially relative to the exhaust casing ring, with at least one pair of said first connecting rods (40A-D; 140A-D) and at least one pair of said second connecting rods (40E-F; 140E-F).

7. The assembly as claimed in the preceding claim, comprising three pairs of connecting rods, with two pairs of connecting rods forming said first connecting rods, and one pair forming said second connecting rods.

8. The assembly as claimed in the preceding claim, wherein one pair of said first connecting rods comprises a fusible pin (50) of the attachment to the ring, which pin can break when it is subjected to the predetermined load, the pin of the second pair of connecting rods being fitted with a polarizing means.

9. The assembly as claimed in the preceding claim, wherein the polarizing means is formed by the difference in the diameters (D1, D2) of the heads (50A, 51 A) of said fusible pin (50) and pin (51) of the attachment of the second pair of connecting rods, and by the diameter of the passage of the head of the pin of the attachment of the second pair of connecting rods.

10. A two-flow jet engine with a front fan and a secondary flow duct which extends downstream from the fan at least as far as the plane of the exhaust casing comprising an assembly according to one of the preceding claims.
